# EUROPEAN PATENT APPLICATION

(11) **EP 1 400 734 A2**
(43) Date of publication of application: **24.03.2004**
(21) Application number: 03255476.8
(22) Date of filing: 02.09.2003
(51) Int. Cl.: F16H 63/30

(54) **Gearboxes**

(30) Priority: 17.09.2002 GB 0221572
(71) Applicant: RICARDO UK LIMITED, Shoreham-by-Sea, West Sussex BN4 5FG (GB)
(72) Inventor: Child, Anthony Joseph, Milton Keynes Buckinghamshire MK7 8QL (GB)
(74) Representative: Jennings, Nigel Robin

(57) **Abstract**

A gearbox includes an input shaft (2), an output shaft (4) and a plurality of pairs of meshing gearwheels (8, 10, 12, 14, 16, 18, 20, 22, 24, 26), at least one gearwheel of one meshing pair including a selectively operable rotary lock which is adapted to lock the gearwheel to the associated shaft, which is intended normally to rotate in a predetermined direction. The gearwheel has a circular section internal engagement surface, which defines a space accommodating two or more brake shoes (30), each brake shoe being mounted to pivot about an axis (32) parallel to the axis of the associated shaft and having an inwardly projecting nose (36) which extends into a cavity (34) in the associated shaft. Actuation means (50) within the shaft is arranged to move the nose (36) outwardly and thus to pivot the brake shoe (30) about its axis (32) and into engagement with the engagement surface on the gearwheel. The nose (36) is spaced from the pivotal axis (32) in the direction opposite to the predetermined direction, whereby all the brake shoes (30) are leading brake shoes, whereby when the brake shoes (30) are in engagement with the engagement surface, the shaft is locked to the gearwheel and torque is transmitted between the shaft and the gearwheel via the two engaging thrust surfaces.

## Description

The present invention relates to gearboxes, particularly though not exclusively to automotive gearboxes, and is concerned with that type of gearbox which includes an input shaft, an output shaft and a plurality of pairs of meshing gearwheels, at least one gearwheel of one meshing pair including a selectively operable rotary lock which is adapted to lock the gearwheel to the associated shaft. Typically, at least one gearwheel of each meshing pair of gearwheels includes such a rotary lock. The advantage of this type of gearbox, which normally also includes a layshaft, is that it can provide a number of gear ratios in excess of the number of pairs of meshing gears.

A gearbox of the type referred to above is disclosed in WO 01/71215. In this known gearbox, the rotary locks comprise a number of bores or rollers which are retained in respective spaces which are defined between the internal surface of the gearwheel and the external surface of the shaft on which the gearwheel is carried and which are of decreasing width in both circumferential directions. An actuator is arranged selectively to displace the balls or rollers circumferentially, thereby causing them to become jammed between the shaft and the gearwheel and thus locking them together. Whilst extremely effective, these rotary locks are relatively complex and have a large part count and are, therefore, relatively expensive.

A different type of rotary lock is disclosed in WO 00/71909. In this rotary lock there is a plurality of pivotally mounted brake shoes cooperating with one end of respective pivotally mounted toggle levers, the other end of which is acted on by a respective hydraulic piston/cylinder unit. All the brake shoes are carried by a common plate attached to the gearwheel. The brake shoes are positioned to engage the internal surface of a drum which is connected to rotate with a shaft. When all the piston/cylinder units are actuated, the brake shoes lock against the drum and lock the plate to the drum and thus also lock the shaft to the gearwheel. This known rotary locking system is extremely complex and has a very large part count and is thus extremely bulky.

It is, therefore, the object of the invention to provide a gearbox of the type referred to above in which the rotary locks are very much simpler and have a smaller part count than the known gearboxes referred to above and are thus inherently cheaper and smaller.

According to the present invention, a gearbox includes an input shaft, an output shaft and a plurality of pairs of meshing gearwheels, at least one gearwheel of one meshing pair including a selectively operable rotary lock, which is adapted to lock the gearwheel to the associated shaft, which is intended normally to rotate in a predetermined direction, the gearwheel having a circular section internal engagement surface, which defines a space accommodating two or more brake shoes, each brake shoe being mounted to pivot about an axis substantially parallel to the axis of the shaft and having an inwardly projecting nose, which extends into a cavity in the shaft, actuation means within the shaft being arranged to move the nose outwardly and thus to pivot the brake shoe about its axis and into engagement with the engagement surface on the gearwheel, the nose being spaced from the pivotal axis in the direction opposite to the predetermined direction, whereby all the brake shoes are leading brake shoes, whereby when the brake shoes are in engagement with the engagement surface the shaft is locked to the gearwheel and torque is transmitted between the shaft and the gearwheel via the two engaging thrust surfaces.

Thus the gearbox in accordance with the present invention operates on a very different principle to that disclosed in WO 00/71909 in that the torque is transmitted between the shaft and the gearwheel through the brake shoes themselves. For this purpose, each brake shoe has a nose which extends into a cavity in the shaft.

It is preferred that the cavity is defined in part by a circular section thrust surface and the nose affords a circular section thrust surface in sliding contact therewith, the centre of the circle on which the two thrust surfaces lies being on the pivotal axis of the brake shoe. Thus one of the surfaces defining the cavity and an opposed surface on the nose are of part-circular section and are in sliding contact. The torque is transmitted between these two surfaces. When the actuation means within the shaft is operated to push the nose outwardly, the brake shoe is pivoted about its pivotal axis. However, the fact that the two thrust surfaces are of part-circular shape centred on the pivotal axis means that they remain in contact and torque may continue to be transmitted through them over their entire area of contact.

All the brake shoes are leading brake shoes which means that as they begin to come into contact with the engagement surface they are rapidly pulled further into contact with it and the lock therefore "snaps" into the engaged position.

It will be appreciated that in a gearbox each shaft will normally turn in only one direction and that each gearwheel on it will normally turn in only one direction.

The thrust is therefore normally transmitted only from the shaft to the gearwheel or vice versa and the part-circular thrust surfaces on the cavity and the brake shoe are therefore positioned on the correct side to transmit the torque in the normal direction. However, if the vehicle to which the gearbox is fitted should enter the overrunning condition, that is to say the condition in which the wheels are driving the engine rather than vice versa, the direction of power flow through the gearbox will be the opposite to normal and the torque will therefore be transmitted between surfaces of the cavity and the nose opposite to the curved thrust surfaces. This is, however, not a problem because overrunning normally occurs only for relatively short periods of time and, more importantly, the torque transmitted during overrunning is very substantially less than that when power is flowing in the usual direction and the engine is driving the wheels.

It is in practice necessary for the pivotal axis of each brake shoe to be offset from its centre towards one end and this means in practice that the nose will be offset from the centre towards the other end. The shaft and gearwheel do of course normally rotate relatively rapidly and there is therefore the possibility of dynamic imbalance. It is therefore preferred that each brake shoe includes a balance weight on that side of its pivotal axis which is remote from the nose, whereby the brake shoe is dynamically balanced.

In order to ensure that the brake shoes disengage positively and rapidly from the engagement surface when the actuating means ceases to urge the noses outwardly, it is preferred that return spring means are provided to urge the brake shoes out of contact with the engagement surface. It is preferred also that the return spring means is arranged between one end of each brake shoe and the other end of the adjacent brake shoe. This will mean in practice that each spring is exerting a return moment tending to cause the brake shoe to come out of engagement with the engagement surface on two brake shoes simultaneously. In the preferred embodiment, there are only two brake shoes and there are thus two return springs arranged between their ends.

The actuating means may take a number of forms but in the preferred embodiment it includes an actuating member which is movable within the shaft in the axial direction and has an externally conical surface in contact with all of the noses associated with the gearwheel. The use of such a conical member is associated with a very large mechanical advantage thereby permitting all the brake shoes to be moved simultaneously without any very great force being applied to the actuating member. The actuating member may also be moved in a variety of different manners but it is preferred that it comprises a piston which is movable within the shaft under hydraulic pressure.

Further features and details of the present invention will be apparent from the following description of one specific embodiment which is given by way of example only with reference to the accompanying drawings, in which:
Figure 1 is a diagrammatic sectional view of a gearbox in accordance with the invention; and
Figure 2 is a diagrammatic sectional view of a single meshing pair of gearwheels and their associated rotary locks.

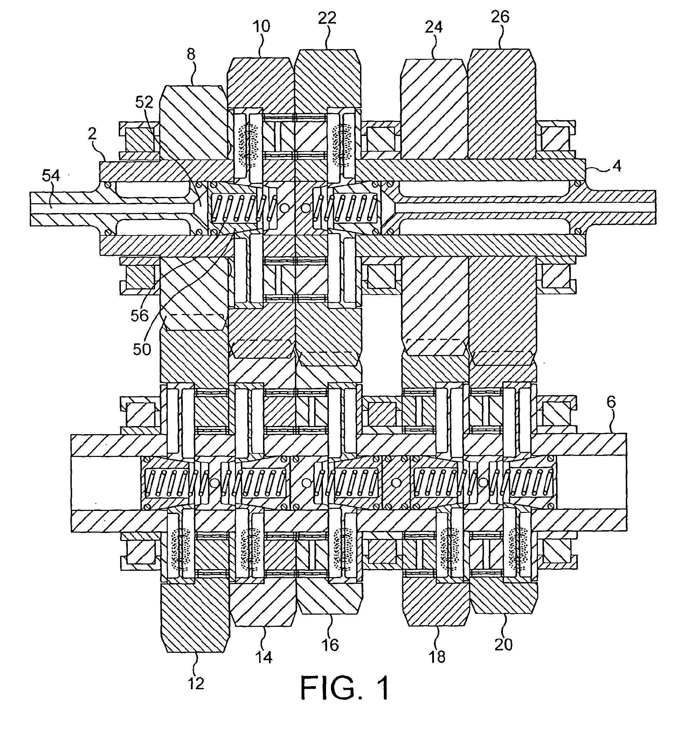

The gearbox shown in Figure 1 comprises an input shaft 2, an output shaft 4 coaxial with it and a layshaft 6 offset from and parallel to the shafts 2 and 4. The input shaft 2 carries a gearwheel 8 which is fixedly connected. It also carries a second gearwheel 10 which is connected to the shaft 2 by a selectively operable rotary lock, which will be explained in more detail below. The input shaft 2 can thus rotate with respect to the gearwheel 10 if the rotary lock is not actuated but when the lock is actuated the shaft 2 and gearwheel 10 are locked together and thus rotate as a solid body. The gearwheels 8 and 10 are in permanent mesh with gearwheels 12 and 14, respectively, which are carried on the layshaft 6 and also include respective rotary locks. The layshaft also includes three further gearwheels 16, 18 and 20, each of which also includes a rotary lock. The gearwheel 16 is in permanent with a gearwheel 22, which is carried by the output shaft 4 and includes a rotary lock. The gearwheels 18 and 20 are in mesh with further gearwheels 24 and 26, respectively, both of which are permanently connected to the output shaft 4 to rotate therewith.

The illustrated gearbox therefore has five pairs of meshing gearwheels but by selective actuation of appropriate rotary locks it is possible to obtain a total of nine output gear ratios.

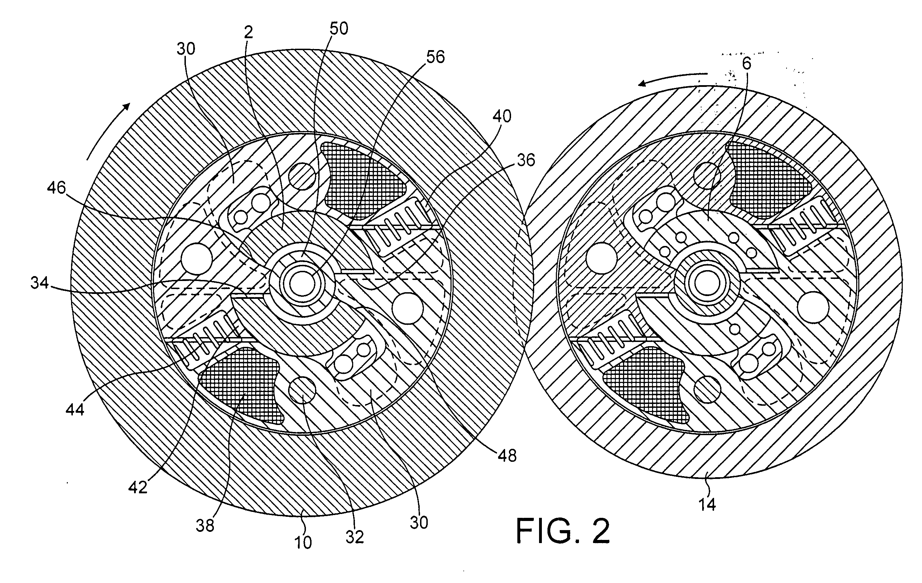

Each of the rotary locks in the gearbox is substantially the same and will now be described with reference to Figure 2 which shows two meshing pairs of gearwheels, which will be supposed to be the gearwheels 10 and 14. The normal direction of rotation of the gearwheel 10 and thus of the shaft 2, as seen in Figure 2, is anti-clockwise which means that the normal direction of the gearwheel 14 and thus of the shaft 6 is clockwise. Referring now specifically to the rotary lock within the gearwheel 10, it will be seen that there are two brake shoes 30, each of which is mounted to rotate about a respective pivot pin 32, which extends substantially parallel to the shaft 2 and is asymmetrically positioned with respect to the brake shoe, that is to say offset from its longitudinal centre towards one end. The external surface of each brake shoe is substantially circular in cross-section and very closely spaced from the internal circular surface of the gearwheel 10. The shaft 2 has two radial slots 34 formed in it, extending into which is an inwardly projecting nose 36 on an associated one of the brake shoes 30. The noses 36 are offset from the longitudinal centre of the brake shoes 30 in a direction opposite to the direction of offset of the pivotal shaft 32. Situated between the pivotal shaft 32 and the associated end of the brake shoes there is a balance weight 38, which is sized and positioned such that each brake shoe is statically and dynamically balanced.

At the leading end of each brake shoe there is a circumferentially extending ledge 40, the outer surface of which forms a continuation of the outer surface of the associated brake shoe. At the trailing end of each brake shoe there is a further ledge 42, whose internal surface is in contact with the shaft 2. The ledges 40 and 42 are opposed in two pairs and defined between them is a space accommodating a respective compression spring 44. Each spring exerts a moment on each brake shoe tending to rotate it about the associated pivotal shaft 32 such that its engagement surface moves out of contact with the internal engagement surface on the gearwheel 10.

The leading edge 46 of each nose 36 is of part-circular section and is in sliding engagement with a correspondingly part-circular surface 48 which defines the leading surface of the associated recess 34 in the shaft 2. Each cooperating pair of surfaces 46, 48 is in sliding contact and constitutes thrust surfaces between which torque is transmitted between the gearwheel and the shaft.

As best seen in Figure 1, the shaft 2 is hollow and accommodates within it a piston 50, whose external surface is conically tapered. The base of the piston 50 is exposed to a cylinder space 52, which is in communication with high pressure hydraulic passageway 54. The piston 50 has a hollow interior and is open at the top and accommodates a compression spring 56 which bears against the base of the piston and against a plug in the shaft 2 and thus urges the piston to the left, as seen in Figure 1. The external surface of the piston 50 is in contact with the radially inner surface of the two noses 36 under a contact pressure produced by the springs 44.

If the rotary lock is not actuated, that is to say the piston 50 is in the left-hand position shown in Figure 1, there is a small clearance between the outer part-circular surfaces of the brake shoes and the opposed engagement surface on the interior of the gearwheel 10 and relative rotation of the gearwheel 10 and the shaft 2 is permitted. If, however, it is desired to lock the shaft and gearwheel together, high pressure hydraulic fluid is applied via the passageway 54 to the base of the piston 50, thereby urging it to the right in Figure 1 against the force of the spring 56. The conical external surface of the piston results in its movement being translated into radially outward movement, as seen in Figure 2, of the two noses 36. This results in pivotal movement of the two brake shoes 30 about their shaft 32 until their outer surface comes into contact with the engagement surface on the gearwheel. Due to the fact that the brake shoes are leading shoes, they then snap into engagement with the gearwheel and lock the gearwheel and shaft together. They then rotate as a solid body.

If it is subsequently desired to change gear and to release the rotary lock, the pressure is removed from the passage 54. The piston 50 then moves to the left, as seen in Figure 1, under the action of the spring 56 and the brake shoes 30 are then moved out of contact with the engagement surface of the gearwheel 10 under the action of the restoring springs 4.

As discussed above, the opposing pairs of thrust surfaces 46, 48 are of part-circular section centred on the axis of the associated pivot pin 32. This means that as the brake shoes are pivoted about the pins 32 the pairs of thrust surfaces remain in surface contact with one another. In the normal direction of rotation, all the torque is transmitted between the gearwheel and the shaft through these surfaces. If, however, the vehicle should enter the overrunning condition, torque is then transmitted through the gearbox in the opposite direction, that is to say from the wheels of the vehicle to the engine. The thrust surfaces 46, 48 will then move out of contact with one another and the torque will be transmitted between the other opposed pair of surfaces of the noses and the recesses in the shaft. These surfaces are not circular but no damage results to the brake shoes because the magnitude of the torque that is transmitted is necessarily very much less than that transmitted when the engine is driving the wheels. It is, however, not essential that the thrust surfaces 46, 48 are part-circular and centred on the axis of the associated pivot pin and it may be desirable for the thrust surfaces to be oriented such that the thrust transmitted between them has a component which acts to increase the contact pressure between the brake shoe and the internal surface of the gearwheel, thereby further improving the torque transmission between the gearwheel and the brake shoes.

## Claims

1. A gearbox which includes an input shaft, an output shaft and a plurality of pairs of meshing gearwheels, at least one gearwheel of one meshing pair including a selectively operable rotary lock which is adapted to lock the gearwheel to the associated shaft, which is intended normally to rotate in a predetermined direction, the gearwheel having a circular section internal engagement surface, which defines space accommodating two or more brake shoes, each brake shoe being mounted to pivot about an axis substantially parallel to the axis of the associated shaft and having an inwardly projecting nose which extends into a cavity in the associated shaft, actuation means within the shaft being arranged to move the nose outwardly and thus to pivot the brake shoe about its axis and into engagement with the engagement surface on the gearwheel, the nose being spaced from the pivotal axis in the direction opposite to the predetermined direction, whereby all the brake shoes are leading brake shoes, whereby when the brake shoes are in engagement with the engagement surface, the shaft is locked to the gearwheel and torque is transmitted between the shaft and the gearwheel via the two engaging thrust surfaces.

2. A gearbox as claimed in Claim 1 in which the cavity is defined in part by a circular section thrust surface and the nose affords a circular section thrust surface in sliding contact therewith, the centre of the circle on which the two thrust surfaces lies being on the pivotal axis of the brake shoe.

3. A gearbox as claimed in Claim 1 or 2, in which each brake shoe includes a balance weight on that side of its pivotal axis which is remote from the nose.

4. A gearbox as claimed in any one of Claims 1 to 3 including return spring means arranged to urge the brake shoes out of contact with the engagement surface.

5. A gearbox as claimed in Claim 4 in which the return spring means is arranged between one end of each brake shoe and the other end of the adjacent brake shoe.

6. A gearbox as claimed in Claim 5 in which there are two brake shoes and two return springs arranged between them.

7. A gearbox as claimed in any one of the preceding claims in which the actuating means includes an actuating member which is movable within the shaft in the axial direction and has an externally conical surface in contact with all the noses associated with the gearwheel.

8. A gearbox as claimed in Claim 7 in which the actuating member comprises a piston which is movable within the shaft under hydraulic pressure.
